# FASCICULE DE BREVET EUROPEEN

(11) **EP 4 730 066 B1**
(45) Date de publication et mention de la délivrance du brevet: **02.12.2026**
(21) Numéro de dépôt: 25207309.3
(22) Date de dépôt: 07.10.2025
(51) Int. Cl.: G05D 1/652, G05D 1/49, G05D 109/22, G05D 107/80, B64C 13/50, B64C 13/16

(54) **SYSTÈME DE COMMANDES DE GOUVERNE DE PROFONDEUR D'UN AÉRONEF ET PROCÉDÉ ASSOCIÉ**
SYSTEM ZUR STEUERUNG DER HÖHENRUDER EINES FLUGZEUGS UND VERFAHREN DAZU
AIRCRAFT ELEVATOR CONTROL SYSTEM AND ASSOCIATED METHOD

(30) Priorité: 18.10.2024 FR 2411337
(43) Date de publication de la demande: 22.04.2026
(73) Titulaire: AIRBUS OPERATIONS (S.A.S.), 31060 Toulouse (FR)
(72) Inventeur: GIBERT, Victor, 31060 Toulouse Cedex 9 (FR); FROT, Clément, 31060 Toulouse Cedex 9 (FR); OUDIN, Simon, 31060 Toulouse Cedex 9 (FR)
(74) Mandataire: Airbus-OPS SAS

(56) Documents cités:
- US-A1- 2021 405 658
- US-B2- 10 479 481
- US-B2- 8 014 910

## Description

L'invention est relative au domaine des commandes de vol des aéronefs. Lors d'une phase de décollage d'un aéronef sur une piste d'un aéroport, un pilote de l'aéronef commande tout d'abord un roulage de l'aéronef sur la piste, en accélération, jusqu'à ce que la vitesse de l'aéronef atteigne une vitesse prédéterminée dite vitesse de rotation. A cette vitesse de rotation, le pilote commande une rotation à cabrer de l'aéronef en agissant sur un organe de commande dans le cockpit tel par exemple qu'un manche ou un mini manche. Cette commande induit un braquage d'au moins une gouverne de profondeur de l'aéronef. Il en résulte que le train avant de l'aéronef se soulève, l'aéronef roulant alors sur son train principal en position cabrée. La gouverne de profondeur est aussi appelée élévateur (« elevator » en anglais). La rotation à cabrer de l'aéronef, lorsque le pilote agit sur l'organe de commande, est plus ou moins rapide selon la charge appliquée par l'aéronef sur le train avant, du fait de son poids. Cette charge est notamment fonction de la position du centre de gravité de l'aéronef, donc en particulier du chargement de l'aéronef (nombre et répartition des passagers, quantité de fret, etc.) lequel peut varier selon les vols de l'aéronef. Plus cette charge est élevée, plus la durée nécessaire pour soulever le train avant est élevée. Lorsque la charge appliquée sur le train avant est très élevée, une première partie du braquage de la gouverne de profondeur n'a pour effet que de décharger le train avant de la charge préalablement appliquée par l'aéronef. Cela requiert une durée d'autant plus élevée que la charge préalablement appliquée par l'aéronef sur le train avant est élevée. Ensuite, une deuxième partie du braquage de la gouverne de profondeur a pour effet de soulever le train avant et donc de cabrer l'aéronef. Seule cette deuxième partie du braquage de la gouverne de profondeur est vraiment utile pour la rotation à cabrer de l'aéronef. Il résulte de cela que le temps de réponse entre une action du pilote sur l'organe de commande et la rotation à cabrer de l'aéronef est variable en fonction de la charge appliquée par l'aéronef sur le train avant. Il serait souhaitable d'avoir des rotations homogènes quelle que soit la charge appliquée par l'aéronef sur le train avant, de façon à améliorer les performances de décollage de l'aéronef et les qualités de vol pendant la phase de décollage.

Les documents US 10 479 481 B2 et US 2021/405658A1 décrivent des systèmes de commandes de vol d'aéronef selon l'art antérieur.

### EXPOSE DE L'INVENTION :

La présente invention a notamment pour but d'apporter une solution à ce problème. Elle concerne un système de commandes de vol d'un aéronef comprenant au moins un calculateur de commandes de vol de l'aéronef prévu pour commander une gouverne de profondeur de l'aéronef. Le système de commandes de vol est remarquable en ce que l'au moins un calculateur de commandes de vol est configuré pour mettre en œuvre les étapes suivantes de façon répétitive pendant une phase d'accélération de l'aéronef lors de son roulage au sol en vue de son décollage :
- détermination d'un angle de braquage de la gouverne de profondeur, correspondant à une charge à appliquer sur un train avant de l'aéronef telle que ladite charge est comprise dans un intervalle de charges prédéterminé ;
- commande d'un actionneur de la gouverne de profondeur de façon à appliquer ledit angle de braquage à la gouverne de profondeur.

Ainsi, le système de commandes de vol permet de contrôler la charge appliquée par l'aéronef sur son train avant pendant la phase d'accélération en vue d'un décollage, donc en particulier au moment où un pilote commande une rotation à cabrer de l'aéronef. Il en résulte que le temps de réponse entre une action du pilote sur l'organe de commande et la rotation à cabrer de l'aéronef est sensiblement indépendant de la charge initialement appliquée par l'aéronef sur le train avant, ce qui permet d'avoir des rotations à cabrer homogènes quelle que soit la charge initialement appliquée par l'aéronef sur le train avant.

Dans un mode de réalisation, la gouverne de profondeur faisant partie d'un ensemble de gouvernes de profondeur de l'aéronef, le calculateur de commandes de vol est configuré de telle façon que l'étape de détermination de l'angle de braquage de la gouverne de profondeur comprend les sous-étapes suivantes :
- estimation d'un moment total autour d'un axe de tangage de l'aéronef ;
- estimation d'un moment, autour de l'axe de tangage, induit par les gouvernes de profondeur de l'ensemble de gouvernes de profondeur ; et
- calcul de l'angle de braquage de la gouverne de profondeur en fonction du moment total, du moment induit par les gouvernes de profondeur, de ladite charge à appliquer sur le train avant et d'une distance entre le centre de gravité de l'aéronef et le train avant.

Dans un mode de réalisation, l'au moins un calculateur de commandes de vol est en outre configuré pour acquérir une valeur de vitesse courante de l'aéronef et pour ne mettre en œuvre les étapes de détermination de l'angle de braquage de la gouverne de profondeur et de commande de l'actionneur de la gouverne de profondeur de façon à appliquer ledit angle de braquage à la gouverne de profondeur que si la valeur de vitesse courante est au moins égale à un seuil de vitesse prédéterminé.

Dans un mode de réalisation, le calculateur de commandes de vol est configuré de telle façon que l'étape de détermination de l'angle de braquage de la gouverne de profondeur comprend une sous étape de limitation dudit angle de braquage de la gouverne de profondeur entre une valeur minimale d'angle de braquage et une valeur maximale d'angle de braquage.

L'invention est également relative à un procédé de commande d'une gouverne de profondeur d'un aéronef, l'aéronef comprenant un système de commandes de vol comprenant au moins un calculateur de commandes de vol prévu pour commander la gouverne de profondeur. Le procédé est remarquable en ce qu'il comprend les étapes suivantes mises en œuvre de façon répétitive par l'au moins un calculateur de commandes de vol pendant une phase d'accélération de l'aéronef lors de son roulage au sol en vue de son décollage :
- détermination d'un angle de braquage de la gouverne de profondeur, correspondant à une charge à appliquer sur un train avant de l'aéronef telle que ladite charge est comprise dans un intervalle de charges prédéterminé ;
- commande d'un actionneur de la gouverne de profondeur de façon à appliquer ledit angle de braquage à la gouverne de profondeur.

Dans un mode de réalisation, la gouverne de profondeur faisant partie d'un ensemble de gouvernes de profondeur de l'aéronef, l'étape de détermination de l'angle de braquage de la gouverne de profondeur comprend les sous-étapes suivantes :
- estimation d'un moment total autour d'un axe de tangage de l'aéronef ;
- estimation d'un moment, autour de l'axe de tangage, induit par les gouvernes de profondeur de l'ensemble de gouvernes de profondeur ; et
- calcul de l'angle de braquage de la gouverne de profondeur en fonction du moment total, du moment induit par les gouvernes de profondeur, de ladite charge à appliquer sur le train avant et d'une distance entre le centre de gravité de l'aéronef et le train avant.

Dans un mode de réalisation, le procédé comprend en outre une étape d'acquisition d'une valeur de vitesse courante de l'aéronef, et les étapes de détermination de l'angle de braquage de la gouverne de profondeur et de commande de l'actionneur de la gouverne de profondeur de façon à appliquer ledit angle de braquage à la gouverne de profondeur ne sont mises en œuvre que si la valeur de vitesse courante est au moins égale à un seuil de vitesse prédéterminé.

Dans un mode de réalisation, l'étape de détermination de l'angle de braquage de la gouverne de profondeur comprend une sous étape de limitation dudit angle de braquage de la gouverne de profondeur entre une valeur minimale d'angle de braquage et une valeur maximale d'angle de braquage.

L'invention est également relative à un aéronef comprenant un tel système de commandes de vol.

### DESCRIPTION DETAILLEE :

L'invention sera mieux comprise à la lecture de la description qui suit et à l'examen des figures annexées.
La figure 1 est une vue d'un aéronef comprenant un système de commandes de vol conforme à un mode de réalisation de l'invention.
La figure 2 illustre de façon schématique un système de commandes de vol conforme à un mode de réalisation de l'invention.
La figure 3 illustre un procédé de commandes de vol d'un aéronef conforme à un mode de réalisation de l'invention.

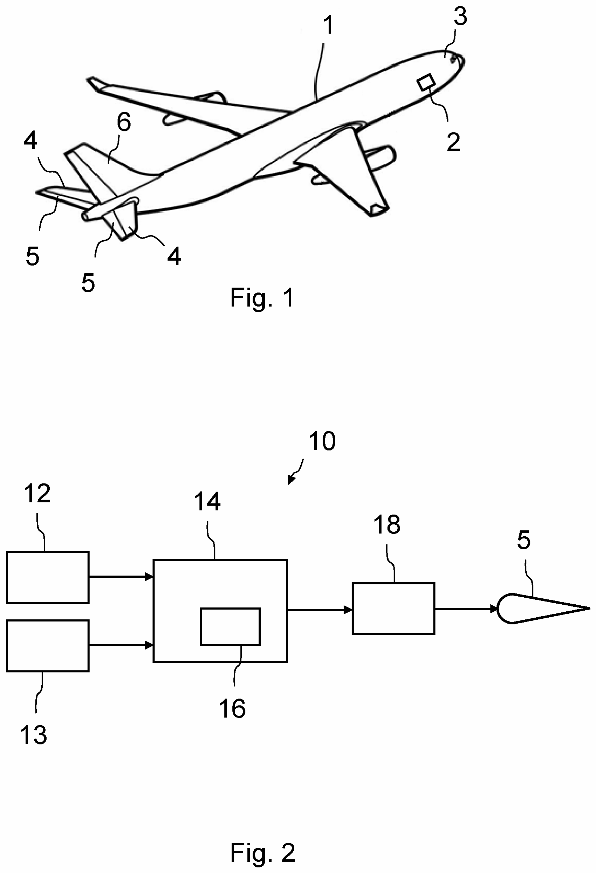

L'aéronef 1 représenté sur la figure 1 comprend un ensemble de gouvernes de profondeur 5, désignées dans la suite de la description par le terme « les gouvernes de profondeur ». Dans l'exemple illustré sur la figure, chaque gouverne de profondeur 5 est articulée à un plan horizontal 4 d'un empennage arrière de l'aéronef. Au moins une gouverne de profondeur 5 est articulée à chaque plan horizontal 4. Dans l'exemple illustré sur la figure, l'empennage arrière comprend deux plans horizontaux 4 disposés en partie basse de l'empennage, de façon symétrique par rapport à une dérive verticale 6. Dans le cas d'autres aéronefs, un ou plusieurs plans horizontaux peuvent être disposés en partie haute de la dérive verticale 6.

L'aéronef 1 comprend un système de commandes de vol tel que le système de commandes de vol 10 illustré sur la figure 2. Ce système de commandes de vol comprend un ensemble 14 de calculateurs de commandes de vol, parmi lesquels au moins un calculateur de commandes de vol 16 est relié en sortie à un actionneur 18 d'une gouverne de profondeur 5 faisant partie de l'ensemble de gouvernes de profondeur de l'aéronef. Le calculateur de commandes de vol 16 est aussi relié en entrée à un organe de pilotage 12 de l'aéronef, tel qu'un manche ou un mini manche installé dans un cockpit 3 de l'aéronef. Le calculateur de commandes de vol 16 est configuré pour commander l'actionneur 18 de la gouverne de profondeur 5, en particulier en fonction d'ordres de pilotage reçus de l'organe de pilotage 12. Pour des raisons de clarté, la présente description est relative à la commande d'un seul actionneur 18 de ladite gouverne de profondeur 5. Toutefois, sans sortir du cadre de l'invention, le calculateur de commandes de vol 16 peut aussi être relié en sortie à d'autres actionneurs non représentés sur la figure, ces autres actionneurs étant prévus pour actionner ladite gouverne de profondeur 5 et/ou d'autres gouvernes de profondeur de l'ensemble de gouvernes de profondeur, non représentées sur la figure. Ainsi, le calculateur de commandes de vol 16 est prévu pour commander au moins une gouverne de profondeur 5 de l'aéronef. Dans la suite de la description, le terme « la gouverne de profondeur » désigne cette au moins une gouverne de profondeur, c'est-à-dire ladite gouverne de profondeur 5 illustrée sur la figure ou encore toute gouverne de profondeur de l'ensemble de gouvernes de profondeur dont au moins un actionneur est commandé par le calculateur de commandes de vol 16. Le calculateur de commandes de vol 16 est aussi relié en entrée à un ensemble de sources d'informations 13 de l'aéronef. L'ensemble de calculateurs 14 est par exemple installé dans une baie avionique 2 de l'aéronef.

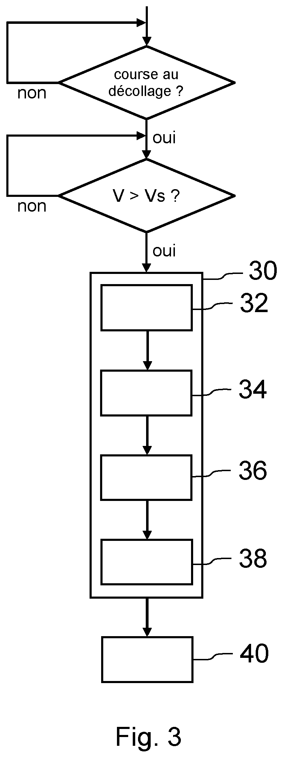

En fonctionnement, lors d'une phase de décollage de l'aéronef sur une piste d'un aéroport, un pilote de l'aéronef actionne une manette de poussée des moteurs de l'aéronef, ce qui a pour effet de commander une poussée des moteurs de l'aéronef prévue pour permettre le décollage. L'aéronef roule alors sur la piste en accélérant. Cette phase du décollage au cours de laquelle l'aéronef roule sur la piste en accélérant est aussi appelée course au décollage (« takeoff run » en anglais). Le calculateur de commandes de vol 16 est relié à d'autres calculateurs avioniques de l'aéronef dont il reçoit une information selon laquelle l'aéronef est dans ladite phase de course au décollage. Le calculateur de commandes de vol 16 reçoit également de l'ensemble de sources d'informations 13, par exemple d'une centrale inertielle ou d'un récepteur d'un système de navigation par satellites, une information de vitesse V de l'aéronef. Lorsque l'aéronef est dans la phase de course au décollage et, de façon avantageuse, que sa vitesse est supérieure à un seuil de vitesse prédéterminé Vs, le calculateur de commandes de vol 16 met en œuvre les étapes du procédé illustré sur la figure 3. Le seuil de vitesse prédéterminé Vs est par exemple égal à 80 nœuds, soit environ 148 km/h. Dans une première étape 30, le calculateur de commandes de vol 16 détermine un angle de braquage de la gouverne de profondeur 5, correspondant à une charge F_{z} qu'il est souhaité d'appliquer sur le train avant de l'aéronef, telle que ladite charge F_{z} est comprise dans un intervalle de charges prédéterminé [F_{zmin} ; F_{zmax}]. Cet intervalle de charges correspond par exemple un intervalle de masses [1tonne ; 2,5tonnes] appliquées sur le train avant. Même si le calculateur de commandes de vol 16 ne commande qu'une seule gouverne de profondeur, ou seulement une partie des gouvernes de profondeur de l'ensemble de gouvernes de profondeur, la détermination de l'angle de braquage est réalisée en considérant que la ou les gouvernes de profondeur qui ne sont pas commandées par ce calculateur 16 de commandes de vol sont également commandées, par d'autres calculateurs de commandes de vol, selon le même angle de braquage. Toutes les gouvernes de profondeur de l'ensemble de gouvernes de profondeur sont commandées selon le même angle de braquage. De façon avantageuse, la première étape 30 comprend les sous-étapes suivantes :
- une sous-étape 32 d'estimation d'un moment total autour d'un axe de tangage de l'aéronef ;
- une sous-étape 34 d'estimation d'un moment, autour de l'axe de tangage, induit par les gouvernes de profondeur ; et
- une sous-étape 36 de calcul de l'angle de braquage de la gouverne de profondeur 5 en fonction du moment total, du moment induit par les gouvernes de profondeur, de ladite charge F_{z} à appliquer par l'aéronef sur le train avant et d'une distance entre le centre de gravité de l'aéronef et le train avant.

Dans un mode de réalisation, à la sous-étape 32 le calculateur de commandes de vol 16 calcule une estimation du moment total *M_{TOTAL}* autour de l'axe de tangage en utilisant l'équation suivante : ${M}_{TOTAL} = {M}_{Tangage} + {M}_{Portance} + {M}_{Pouss é e} + {M}_{Freinage} + {M}_{GroundSpoilers}$ dans laquelle :
*M_{Tangage} = Cm.S.l.P_{dyn}* ${M}_{Portance} = {d}_{TrainPrincipal \to CG} . \left(m.g-Cz.S.{P}_{dyn}\right)$ ${M}_{Pouss é e} = {d}_{Moteur \to CG} . {Force}_{Pouss é e}$ ${M}_{Freinage} = {d}_{TrainPrincipal \to CG} . {Force}_{Freinage}$ ${M}_{GroundSpoilers} = {Cm}_{{δ}_{GSP}} . {δ}_{GSP} . S . l . {P}_{dyn} + {Cz}_{{δ}_{GSP}} . {δ}_{GSP} . S . {P}_{dyn} . {d}_{CG \to Centre de pouss é e}$ avec :
*Cm:* coefficient aérodynamique de tangage
Cz: coefficient aérodynamique de portance
*S* : surface de référence
*l* : corde aérodynamique moyenne
*P_{dyn}* : pression dynamique
*m* : masse de l'aéronef
*g* : constante gravitationnelle
*nₓ* : accélération suivant l'axe longitudinal du fuselage de l'aéronef ${Force}_{Pouss é e} = {f}_{1} \left({n}_{x}\right)$ ${Force}_{Freinage} = {f}_{2} \left({n}_{x}\right)$
*f*₁(*nₓ*) est une première fonction de *nₓ* et notamment du signe de *nₓ*
*f*₂(*nₓ*) est une deuxième fonction de *nₓ* et notamment du signe de *nₓ*
*δ_{GSP}* : braquage des aérofreins, aussi appelés volets de freins de sol (« ground spoilers » en anglais)
*Cm_{δ_{GSP}}* : coefficient d'efficacité aérodynamique liée au braquage des aérofreins (volets de freins de sol)
*d*_{*TrainPrincipal*→*CG*} : composante, suivant l'axe longitudinal du fuselage de l'aéronef, de la distance entre le train principal de l'aéronef et le centre de gravité de l'aéronef
*d_{Moteur→CG}* : composante, suivant l'axe longitudinal du fuselage de l'aéronef, de la distance entre les moteurs de propulsion de l'aéronef et le centre de gravité de l'aéronef
*d*_{*CG*→*Centre de poussée*} : distance entre le centre de gravité de l'aéronef et le centre de poussée.

Parmi ces informations, celles dont la valeur est variable (pression dynamique, accélération, etc.) sont par exemple transmises au calculateur de commandes de vol 16 par des sources d'informations de l'ensemble de sources d'informations 13. Celles dont la valeur est constante sont par exemple enregistrées dans une mémoire ou une base de données du calculateur de commandes de vol 16 ou bien dans une mémoire ou une base de données d'un calculateur avionique faisant partie de l'ensemble de sources d'informations 13.

Dans un mode de réalisation, à la sous-étape 34 le calculateur de commandes de vol 16 calcule une estimation du moment, autour de l'axe de tangage, induit par les gouvernes de profondeur 5 en utilisant l'équation suivante : ${M}_{gouvernes} = m . {δ}_{q} = S . l . {P}_{dyn} . {Cm}_{{δ}_{q}}$ avec :
*δ_{q}* : braquage des gouvernes de profondeur
*Cm_{δ_{q}}* : coefficient d'efficacité aérodynamique liée au braquage des gouvernes de profondeur.

Dans un mode de réalisation, à la sous-étape 36 le calculateur de commandes de vol 16 calcule l'angle de braquage *δ_{q}* de la gouverne de profondeur 5 en fonction du moment total *M_{TOTAL},* du moment *M_{gouvernes}* induit par les gouvernes de profondeur, de ladite charge F_{z} à appliquer par l'aéronef sur le train avant et de la distance entre le centre de gravité de l'aéronef et le train avant en utilisant l'équation suivante : ${δ}_{q} = \frac{{M}_{Total} + Fz . {d}_{{x}_{CG} \to NW}}{{M}_{gouvernes}}$
avec :
*d_{xCG→NW}* : distance entre le centre de gravité de l'aéronef et le train avant.

De façon avantageuse, le calculateur de commandes de vol 16 calcule deux valeurs d'angles de braquage de la gouverne de profondeur 5 : une valeur minimale *δ_{qₘᵢₙ}* d'angle de braquage et une valeur maximale *δ_{qₘₐₓ}* d'angle de braquage, correspondant respectivement aux bornes minimale F_{zmin} et maximale F_{zmax} de l'intervalle de charges prédéterminé [F_{zmin} ; F_{zmax}].

Ces deux valeurs d'angle de braquage sont calculées en utilisant par exemple les équations suivantes : ${δ}_{{q}_{min}} = \frac{{M}_{Total} + {F}_{{z}_{min}} . {d}_{{x}_{CG} \to NW}}{{M}_{gouvernes}}$ ${δ}_{{q}_{max}} = \frac{{M}_{Total} + {F}_{{z}_{max}} . {d}_{{x}_{CG} \to NW}}{{M}_{gouvernes}}$

Ces deux valeurs délimitent un intervalle [*δ_{qₘᵢₙ}* ; *δ_{qₘₐₓ}*] de valeurs admissibles de l'angle de braquage de la gouverne de profondeur 5 pour permettre d'obtenir une charge sur le train avant comprise dans l'intervalle de charges prédéterminé [F_{zmin} ; F_{zmax}].

Le procédé comprend en outre une deuxième étape 40 au cours de laquelle le calculateur de commandes de vol 16 commande l'actionneur 18 de la gouverne de profondeur 5 de façon à appliquer à la gouverne de profondeur, l'angle de braquage calculé à l'étape 30. Cela permet ainsi d'appliquer ladite charge F_{z} souhaitée sur le train avant.

Dans un mode particulier de réalisation, l'étape 30 comprend en outre une sous-étape 38 de limitation de l'angle de braquage de la gouverne de profondeur préalablement calculé à la sous-étape 36, entre une valeur minimale d'angle de braquage et une valeur maximale d'angle de braquage. La valeur minimale d'angle de braquage est par exemple égale à -5 degrés (braquage à cabrer) et la valeur maximale d'angle de braquage est par exemple égale à 10 degrés (braquage à piquer). Cette limitation de l'angle de braquage permet de garantir que l'angle de braquage commandé de la gouverne de profondeur 5 reste dans un intervalle de valeurs choisi de façon à permettre que, en outre, des ordres de braquage de la gouverne de profondeur commandés par un pilote de l'aéronef puissent avoir un effet sur l'aéronef.

Comme indiqué précédemment, la condition d'engagement des étapes 30 et 40 du procédé selon laquelle la vitesse de l'aéronef est supérieure à un seuil de vitesse prédéterminé Vs correspond à un mode avantageux de réalisation, mais elle n'est pas limitative de l'invention. Le respect de cette condition permet notamment de ne contrôler la charge appliquée par l'aéronef sur le train avant que lorsque cela est le plus utile en vue de la rotation à cabrer de l'aéronef. De plus, étant donné que l'effet du braquage des gouvernes de profondeur sur la charge appliquée sur le train avant de l'aéronef est d'autant plus élevé que la vitesse de l'aéronef est élevée, la mise en œuvre des étapes 30 et 40 du procédé pour des vitesses inférieures au seuil de vitesse prédéterminé Vs pourrait engendrer inutilement des braquages élevés des gouvernes de profondeur pour permettre de contrôler la charge F_{z} sur le train avant de l'aéronef.

La mise en œuvre des étapes 30 et 40 du procédé permet de contrôler la charge F_{z} appliquée par l'aéronef sur son train avant. Il en résulte que les rotations à cabrer pour différents décollages de l'aéronef sont ainsi homogènes. La borne F_{zmax} de l'intervalle [F_{zmin} ; F_{zmax}] dans lequel est choisie la charge F_{z} à appliquer sur le train avant de l'aéronef est définie de telle façon que lorsque le pilote commande un braquage à cabrer des gouvernes de profondeur 5, la durée nécessaire pour décharger le train avant de la charge F_{z} appliquée par l'aéronef soit suffisamment courte par rapport aux contraintes opérationnelles du décollage. De façon avantageuse, la borne F_{zmin} de l'intervalle [F_{zmin} ; F_{zmax}] est définie de telle façon que la charge F_{z} à appliquer sur le train avant de l'aéronef soit suffisante pour éviter un phénomène d'autorotation de l'aéronef pendant la course au décollage.

## Revendications

1. Système de commandes de vol (10) d'un aéronef (1) comprenant au moins un calculateur de commandes de vol (16) de l'aéronef prévu pour commander une gouverne de profondeur (5) de l'aéronef dans lequel l'au moins un calculateur de commandes de vol est configuré pour mettre en œuvre les étapes suivantes de façon répétitive pendant une phase d'accélération de l'aéronef lors de son roulage au sol en vue de son décollage :
- détermination (30) d'un angle de braquage de la gouverne de profondeur (5) ;
- commande (40) d'un actionneur (18) de la gouverne de profondeur (5) de façon à appliquer ledit angle de braquage à la gouverne de profondeur, **caractérisé en ce que** ledit angle de braquage de la gouverne de profondeur (5) est un angle de braquage pour lequel une charge (F_{z}) appliquée par l'aéronef sur son train avant est telle que ladite charge est comprise dans un intervalle de charges ([F_{zmin} ; F_{zmax}]) prédéterminé et **en ce que**, la gouverne de profondeur (5) faisant partie d'un ensemble de gouvernes de profondeur de l'aéronef, l'étape (30) de détermination de l'angle de braquage de la gouverne de profondeur comprend les sous-étapes suivantes :
- estimation (32) d'un moment total autour d'un axe de tangage de l'aéronef ;
- estimation (34) d'un moment, autour de l'axe de tangage, induit par les gouvernes de profondeur de l'ensemble de gouvernes de profondeur ; et
- calcul (36) de l'angle de braquage de la gouverne de profondeur en fonction du moment total, du moment induit par les gouvernes de profondeur, de ladite charge (F_{z}) appliquée par l'aéronef sur son train avant et d'une distance entre le centre de gravité de l'aéronef et le train avant.

2. Système selon la revendication précédente, **caractérisé en ce que** l'au moins un calculateur de commandes de vol est en outre configuré pour acquérir une valeur de vitesse courante (V) de l'aéronef et pour ne mettre en œuvre les étapes de détermination (30) de l'angle de braquage de la gouverne de profondeur et de commande (40) de l'actionneur de la gouverne de profondeur de façon à appliquer ledit angle de braquage à la gouverne de profondeur que si la valeur de vitesse courante est au moins égale à un seuil de vitesse prédéterminé (Vs).

3. Système selon l'une quelconque des revendications précédentes, **caractérisé en ce que** l'étape de détermination (30) de l'angle de braquage de la gouverne de profondeur comprend une sous étape (38) de limitation dudit angle de braquage de la gouverne de profondeur entre une valeur minimale d'angle de braquage et une valeur maximale d'angle de braquage.

4. Procédé de commande d'une gouverne de profondeur (5) d'un aéronef (1), l'aéronef comprenant un système de commandes de vol (10) comprenant au moins un calculateur de commandes de vol (16) prévu pour commander la gouverne de profondeur,
le procédé comprenant les étapes suivantes mises en œuvre de façon répétitive par l'au moins un calculateur de commandes de vol pendant une phase d'accélération de l'aéronef lors de son roulage au sol en vue de son décollage :
- détermination (30) d'un angle de braquage de la gouverne de profondeur (5) ;
- commande (40) d'un actionneur (18) de la gouverne de profondeur (5) de façon à appliquer ledit angle de braquage à la gouverne de profondeur, **caractérisé en ce que** ledit angle de braquage de la gouverne de profondeur (5) est un angle de braquage pour lequel une charge (F_{z}) appliquée par l'aéronef sur son train avant est telle que ladite charge est comprise dans un intervalle de charges ([F_{zmin} ; F_{zmax}]) prédéterminé et **en ce que**, la gouverne de profondeur (5) faisant partie d'un ensemble de gouvernes de profondeur de l'aéronef, l'étape (30) de détermination de l'angle de braquage de la gouverne de profondeur comprend les sous-étapes suivantes :
- estimation (32) d'un moment total autour d'un axe de tangage de l'aéronef ;
- estimation (34) d'un moment, autour de l'axe de tangage, induit par les gouvernes de profondeur de l'ensemble de gouvernes de profondeur ; et
- calcul (36) de l'angle de braquage de la gouverne de profondeur en fonction du moment total, du moment induit par les gouvernes de profondeur, de ladite charge (F_{z}) appliquée par l'aéronef sur son train avant et d'une distance entre le centre de gravité de l'aéronef et le train avant.

5. Procédé selon la revendications 4, **caractérisé en ce qu'**il comprend en outre une étape d'acquisition d'une valeur de vitesse courante (V) de l'aéronef et **en ce que** les étapes de détermination (30) de l'angle de braquage de la gouverne de profondeur et de commande (40) de l'actionneur de la gouverne de profondeur de façon à appliquer ledit angle de braquage à la gouverne de profondeur ne sont mises en œuvre que si la valeur de vitesse courante est au moins égale à un seuil de vitesse prédéterminé (Vs).

6. Procédé selon l'une quelconque des revendications 4 ou 5, **caractérisé en ce que** l'étape de détermination (30) de l'angle de braquage de la gouverne de profondeur comprend une sous étape (38) de limitation dudit angle de braquage de la gouverne de profondeur entre une valeur minimale d'angle de braquage et une valeur maximale d'angle de braquage.

7. Aéronef (1), **caractérisé en ce qu'**il comprend un système de commandes de vol (10) selon l'une quelconque des revendications 1 à 3.

## Patentansprüche

1. Flugsteuerungssystem (10) eines Flugzeugs (1), das mindestens einen Flugsteuerungsrechner (16) des Flugzeugs aufweist, der zur Steuerung eines Höhenruders (5) des Flugzeugs vorgesehen ist, wobei der mindestens eine Flugsteuerungsrechner so konfiguriert ist, dass er während einer Beschleunigungsphase des Flugzeugs beim Rollen auf dem Boden im Hinblick auf dessen Start wiederholt die folgenden Schritte ausführt:
- Bestimmen (30) eines Anstellwinkels des Höhenruders (5);
- Steuern (40) eines Stellglieds (18) des Höhenruders (5), um den Anstellwinkel auf das Höhenruder anzuwenden, **dadurch gekennzeichnet, dass** der Anstellwinkel des Höhenruders (5) ein Anstellwinkel ist, bei dem eine vom Flugzeug auf sein Bugfahrwerk ausgeübte Last (F_{z}) so bemessen ist, dass diese Last innerhalb eines vorgegebenen Lastbereichs ([F_{zmin} ; F_{zmax}]) liegt, und dass das Höhenruder (5) Teil einer Gruppe von Höhenrudern des Flugzeugs ist, wobei der Schritt zur Bestimmen (30) des Anstellwinkels des Höhenruders die folgenden Teilschritte aufweist:
- Schätzen (32) eines Gesamtmoments um eine Nickachse des Flugzeugs;
- Schätzen (34) eines durch die Höhenruder der Gruppe von Höhenrudern induzierten Moments um die Nickachse; und
- Berechnen (36) des Anstellwinkels des Höhenruders in Abhängigkeit vom Gesamtmoment, vom durch die Höhenruder induzierten Moment, von der Last ((F_{z}), die das Flugzeug auf sein Bugfahrwerk ausübt, und von einem Abstand zwischen dem Schwerpunkt des Flugzeugs und dem Bugfahrwerk.

2. System nach dem vorhergehenden Anspruch, **dadurch gekennzeichnet, dass** der mindestens eine Flugsteuerungsrechner ferner so ausgelegt ist, dass er einen aktuellen Geschwindigkeitswert (V) des Flugzeugs erfasst und die Schritte zum Bestimmen (30) des Anstellwinkels des Höhenruders und zum Steuern (40) des Stellglieds des Höhenruders so ausführt, dass der Anstellwinkel nur dann auf das Höhenruder angewendet wird, wenn der aktuelle Geschwindigkeitswert mindestens einem vorgegebenen Geschwindigkeitsschwellenwert (Vs) entspricht.

3. System nach einem der vorhergehenden Ansprüche, **dadurch gekennzeichnet, dass** der Schritt zum Bestimmen (30) des Anstellwinkels des Höhenruders einen Teilschritt (38) aufweist, bei dem der Anstellwinkel des Höhenruders zwischen einem minimalen Anstellwinkel und einem maximalen Anstellwinkel begrenzt wird.

4. Verfahren zum Steuern eines Höhenruders (5) eines Flugzeugs (1), wobei das Flugzeug ein Flugsteuerungssystem (10) aufweist, das mindestens einen Flugsteuerungsrechner (16) enthält, der zur Steuerung des Höhenruders vorgesehen ist,
wobei das Verfahren die folgenden Schritte aufweist, die von dem mindestens einen Flugsteuerungsrechner während einer Beschleunigungsphase des Flugzeugs beim Rollen auf dem Boden im Hinblick auf dessen Start wiederholt ausgeführt werden:
- Bestimmen (30) eines Anstellwinkels des Höhenruders (5);
- Steuern (40) eines Stellglieds (18) des Höhenruders (5), um den Anstellwinkel auf das Höhenruder anzuwenden, **dadurch gekennzeichnet, dass** der Anstellwinkel des Höhenruders (5) ein Anstellwinkel ist, bei dem eine vom Flugzeug auf sein Bugfahrwerk ausgeübte Last (F_{z}) so bemessen ist, dass diese Last innerhalb eines vorgegebenen Lastbereichs ([F_{zmin} ; F_{zmax}]) liegt, und dass das Höhenruder (5) Teil einer Gruppe von Höhenrudern des Flugzeugs ist, wobei der Schritt zur Bestimmen (30) des Anstellwinkels des Höhenruders die folgenden Teilschritte aufweist:
- Schätzen (32) eines Gesamtmoments um eine Nickachse des Flugzeugs;
- Schätzen (34) eines durch die Höhenruder der Gruppe von Höhenrudern induzierten Moments um die Nickachse; und
- Berechnen (36) des Anstellwinkels des Höhenruders in Abhängigkeit vom Gesamtmoment, vom durch die Höhenruder induzierten Moment, von der Last ((F_{z}), die das Flugzeug auf sein Bugfahrwerk ausübt, und von einem Abstand zwischen dem Schwerpunkt des Flugzeugs und dem Bugfahrwerk.

5. Verfahren nach Anspruch 4, **dadurch gekennzeichnet, dass** es ferner einen Schritt zum Erfassen eines aktuellen Geschwindigkeitswerts (V) des Flugzeugs aufweist und dass die Schritte zum Bestimmen (30) des Anstellwinkels des Höhenruders und zum Steuern (40) des Stellglieds des Höhenruders, um den Anstellwinkel auf das Höhenruder anzuwenden, nur dann durchgeführt werden, wenn der aktuelle Geschwindigkeitswert mindestens einem vorgegebenen Geschwindigkeitsschwellenwert (Vs) entspricht.

6. Verfahren nach einem der Ansprüche 4m oder 5, **dadurch gekennzeichnet, dass** der Schritt zum Bestimmen (30) des Anstellwinkels des Höhenruders einen Teilschritt (38) aufweist, bei dem der Anstellwinkel des Höhenruders zwischen einem minimalen Anstellwinkel und einem maximalen Anstellwinkel begrenzt wird.

7. Flugzeug (1), **dadurch gekennzeichnet, dass** es ein Flugsteuerungssystem (10) nach einem der Ansprüche 1 bis 3 aufweist.

## Claims

1. Flight control system (10) for an aircraft (1) comprising at least one flight control computer (16) of the aircraft, intended to control an elevator (5) of the aircraft, wherein the at least one flight control computer is configured to implement the following steps repetitively during an acceleration phase of the aircraft when taxiing for takeoff:
- determining (30) a steering angle of the elevator (5);
- controlling (40) an actuator (18) for the elevator (5) to apply said steering angle to the elevator, **characterized in that** said steering angle of the elevator (5) is a steering angle for which a load (F_{z}) applied by the aircraft to its front landing gear is such that said load lies within a predetermined load range ([F_{zmin}; F_{zmax}]) and **in that**, the elevator (5) being part of a set of elevators of the aircraft, the step (30) of determining the steering angle of the elevator comprises the following sub-steps:
- estimating (32) a total moment about a pitch axis of the aircraft;
- estimating (34) a moment, about the pitch axis, induced by the elevators of the set of elevators; and
- calculating (36) the steering angle of the elevator as a function of the total moment, of the moment induced by the elevators, of said load (F_{z}) applied by the aircraft to its front landing gear and a distance between the centre of gravity of the aircraft and the front landing gear.

2. System according to the preceding claim, **characterized in that** the at least one flight control computer is furthermore configured to acquire a current speed value (V) of the aircraft and to implement the steps of determining (30) the steering angle of the elevator and of controlling (40) the actuator of the elevator to apply said steering angle to the elevator only if the current speed value is at least equal to a predetermined speed threshold (Vs).

3. System according to any one of the preceding claims, **characterized in that** the step (30) of determining the steering angle of the elevator comprises a sub-step (38) of limiting said steering angle of the elevator between a minimum steering angle value and a maximum steering angle value.

4. Method for controlling an elevator (5) of an aircraft (1), the aircraft comprising a flight control system (10) comprising at least one flight control computer (16) intended to control the elevator,
the method comprising the following steps implemented repetitively by the at least one flight control computer during an acceleration phase of the aircraft when taxiing for takeoff:
- determining (30) a steering angle of the elevator (5);
- controlling (40) an actuator (18) for the elevator (5) to apply said steering angle to the elevator, **characterized in that** said steering angle of the elevator (5) is a steering angle for which a load (F_{z}) applied by the aircraft to its front landing gear is such that said load lies within a predetermined load range ([F_{zmin}; F_{zmax}]) and **in that**, the elevator (5) being part of a set of elevators of the aircraft, the step (30) of determining the steering angle of the elevator comprises the following sub-steps:
- estimating (32) a total moment about a pitch axis of the aircraft;
- estimating (34) a moment, about the pitch axis, induced by the elevators of the set of elevators; and
- calculating (36) the steering angle of the elevator as a function of the total moment, of the moment induced by the elevators, of said load (F_{z}) applied by the aircraft to its front landing gear and a distance between the centre of gravity of the aircraft and the front landing gear.

5. Method according to Claim 4, **characterized in that** it further comprises a step of acquiring a current speed value (V) of the aircraft and **in that** the steps of determining (30) the steering angle of the elevator and of controlling (40) the actuator of the elevator to apply said steering angle to the elevator are only implemented if the current speed value is at least equal to a predetermined speed threshold (Vs).

6. Method according to either of Claims 4 and 5, **characterized in that** the step (30) of determining the steering angle of the elevator comprises a sub-step (38) of limiting said steering angle of the elevator between a minimum steering angle value and a maximum steering angle value.

7. Aircraft (1), **characterized in that** it comprises a flight control system (10) according to any one of Claims 1 to 3.
